Europäisches Patentamt

(19) European Patent Office

Office européen des brevets

(11) Publication number : **0 501 531 B1**

# (12) EUROPEAN PATENT SPECIFICATION

(45) Date of publication of patent specification :
**10.11.93 Bulletin 93/45**

(51) Int. Cl.⁵ : **F02D 41/14, G01M 15/00**

(21) Application number : **92108274.9**

(22) Date of filing : **12.06.90**

(54) **A method and system for monitoring the operating characteristics of an internal combustion engine, particularly an internal combustion engine with electronic injection.**

(30) Priority : **14.06.89 IT 6748389**

(43) Date of publication of application :
**02.09.92 Bulletin 92/36**

(45) Publication of the grant of the patent :
**10.11.93 Bulletin 93/45**

(84) Designated Contracting States :
**DE ES FR GB SE**

(56) References cited :
**FR-A- 2 567 962**
**GB-A- 2 005 443**
**GB-A- 2 197 956**
**US-A- 3 871 215**
**US-A- 4 683 856**
**US-A- 4 705 000**
**PATENT ABSTRACTS OF JAPAN, vol. 10, no. 242 (M-509)[2298], 21st August 1986; & JP-A-61 72 844 (MAZDA MOTOR CORP.) 14-04-1986**

(60) Publication number of the earlier application in accordance with Art. 76 EPC : **0 408 518**

(73) Proprietor : **FIAT AUTO S.p.A.**
**Corso Giovanni Agnelli 200**
**I-10135 Torino (IT)**

(72) Inventor : **Palazzetti, Mario**
**Via Don Luigi Balbiano, 14/A**
**I-10051 Avigliana, Torino (IT)**
Inventor : **Ponti, Cesare**
**Via Ailliaud, 8**
**I-10051 Avigliana, Torino (IT)**

(74) Representative : **Bosotti, Luciano et al**
**c/o Jacobacci-Casetta & Perani S.p.A. Via Alfieri, 17**
**I-10121 Torino (IT)**

EP 0 501 531 B1

## Description

The present invention relates generally to the monitoring of the operating characteristics of internal combustion engines with several cylinders, particularly internal combustion engines with electronic injection.

In general, in order to enable diagnostic analysis of the operation of engines of this type to be carried out, it is necessary for specific functions to be provided in the electronic unit which controls the injection so as to give an external diagnostic system access to the most significant information relating to the operating conditions of the engine.

A first object of the present invention is to provide this analysis function in a manner which is simple both from the point of view of the production of the electronic control unit (preferably with the use of a control unit in current production) and as regards the diagnostic equipment, without adversely affecting the accuracy of the diagnostic sequence.

The very fact that the control unit can provide the said information relating to the analysis also enables the control unit to be adjusted automatically by means of feedback, possibly in real time, so that the operating parameters can be adjusted following developments in the operating conditions of the engine.

A specific object of the present invention is to provide means which can identify selectively conditions of malfunction which are attributable essentially to inadequate sealing of the pistons in the respective cylinders (an inadequate compression ratio).

According to the present invention, these and other objects which will become clearer from the following description are achieved by virtue of a method and a system having the characteristics quoted in the claims.

Essentially, a system according to the invention operates during a checking stage in which the engine is in neutral (virtually inertial operating conditions, according to criteria which will better be described below) and the accelerator is fully depressed.

In these conditions, the system acts on the fuel-injection function so as to make the engine accelerate and decelerate at full power between two preset rates of revolution (for example 1400 and 5800 revs./min.).

European Patent Application No. 90830264.9 (EP-A-0 408 518), out of which the present application was divided, specifically refers to a method and system wherein at each acceleration the metering of the fuel is varied so as to achieve a gradual weakening of the mixture. The condition in which each cylinder begins to have an absence of combustion is detected (preferably by means of a dynamic measurement of the torque delivered by each cylinder). The detection of this lack of combustion, and the identification of the conditions under which it arises, enable the injection system to be analyzed thoroughly, particularly as regards the fuel metering limits.

This information can be obtained and used in the engine-design stage, in the calibration and adjustment stage (the tuning stage), and also for an automatic self-adjustment action carried out directly on the injection function under the normal conditions of use of the engine in a vehicle.

Specifically, a system according to the invention enables a lack of combustion which is not linked to the fuel metering to be identified clearly so that conditions of malfunction resulting from disturbances of various origin, for example the improper operation of the ignition system, can be identified.

The invention will now be described, purely by way of non-limiting example, with reference to the appended drawings, in which:

Figure 1 shows schematically, in the form of a graph, a function monitoring the useful torque/braking torque characteristic of each cylinder of an internal combustion engine (for example a four-cylinder engine), and

Figure 2 is a block schematic diagram showing the general structure of a device according to the invention.

The primary source of the signals for use by the processing functions in the currently preferred embodiment of the present invention is a module for the dynamic monitoring of the torque and of the power delivered by the individual cylinders of a motor-vehicle engine M (not illustrated as a whole), produced according to the solution described in Italian patent No. 1 180 045.

This patent describes the construction of a device, herein generally indicated 1, which, by monitoring the angular acceleration and velocity of rotation of the engine M at particular points - or regions - of its rotary travel, is able to provide respective signals $C_1(\omega)$, $C_2(\omega)$, $C_3(\omega)$ and $C_4(\omega)$, which are indicative of the torque (useful and/or braking) associated with each cylinder of the engine M. Naturally, implicit reference is made here (purely by way of non-limiting example) to an engine including four cylinders.

More particularly, according to the solution described in Patent No. 1 180 045 cited above, the torque is monitored in virtually inertial conditions, that is to say, whilst the engine is in neutral: the whole being based on the more general criteria described in prior Italian Patent No. 1 155 709.

The monitoring is carried out with the engine M being made to "cycle" through successive acceleration and deceleration phases.

For this purpose, the system according to the invention includes a processing or governing module (2) for carrying out the desired testing or analysis function upon receipt of a command which is applied by the driver (or whoever is performing the test) by means of a push button. The receipt of this command causes a subsequent acceleration command, applied by the full depression of the corresponding pedal P (accelerator pedal pushed to the floor continuously with the engine in neutral), to be transferred to the central unit F which controls the fuel injection so as to result in a sequence of successive phases of acceleration and deceleration between two preset rates of rotation (e.g. 1400 and 5800 revs./min).

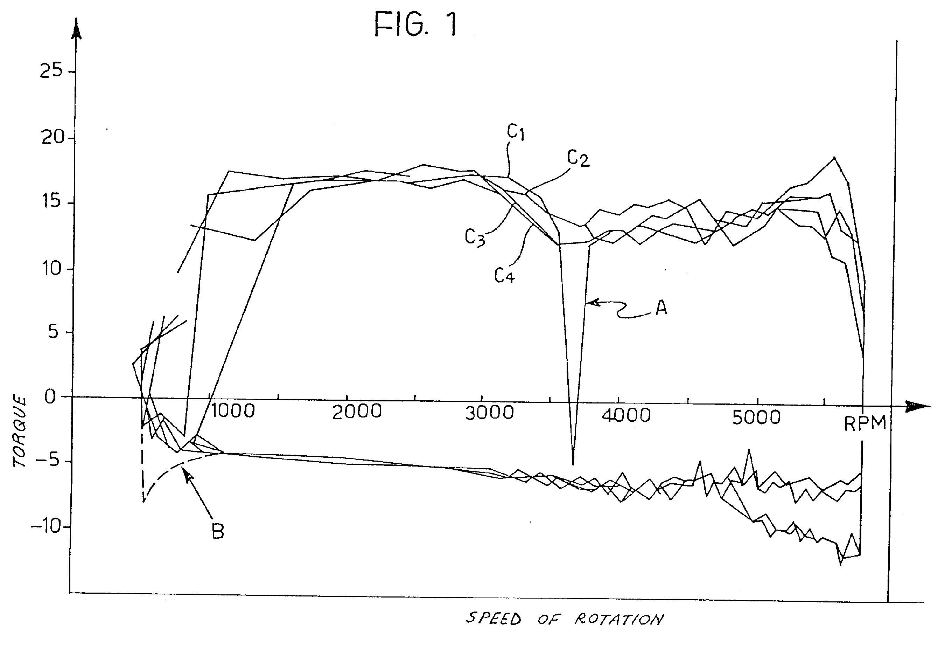

According to criteria described in prior Patent No. 1 180 045, in these conditions, for each cylinder of the engine, the device 1 can output a signal $C_i(\omega)$, which corresponds to the graphs shown in Figure 1 (i = 1, 2, 3, 4).

This is a signal which provides a trace of the useful torque (positive ordinate) and the braking torque (negative ordinate) as well as the corresponding powers (by means of the simple processing of the driving torque) as functions of the angular velocity of rotation of the engine ($\omega$). It should, in fact, be noted, that the power signal is obtainable directly from the torque signal simply by its multiplication by the corresponding angular velocity detected.

Any lack of combustion occurring in any one of the cylinders can be detected immediately from the respective graph of Figure 1 and is in the form of a rapid downward flicker A in the signal of the torque (or power) delivered: a cylinder in which there is no combustion does not in fact deliver any useful torque but, on the contrary, has a purely braking effect.

In particular, a lack of combustion may occur only in correspondence with a particular range of values of the rate of rotation $\omega$ of the engine. A signal corresponding to the graph of Figure 1 thus enables the range of values of the rate of rotation $\omega$ at which lack of combustion occurs, to be identified precisely.

In general, the Applicant has found that, for the purposes of the present invention, the requirements for the precise identification of the values of the angular acceleration of the engine can be fairly relaxed compared with those to which explicit reference is made in the previous patent 1 180 045. This is an undoubted advantage since it enables the device 1 to be incorporated in a system according to the invention even with sensors which are not particularly sophisticated and therefore of limited cost.

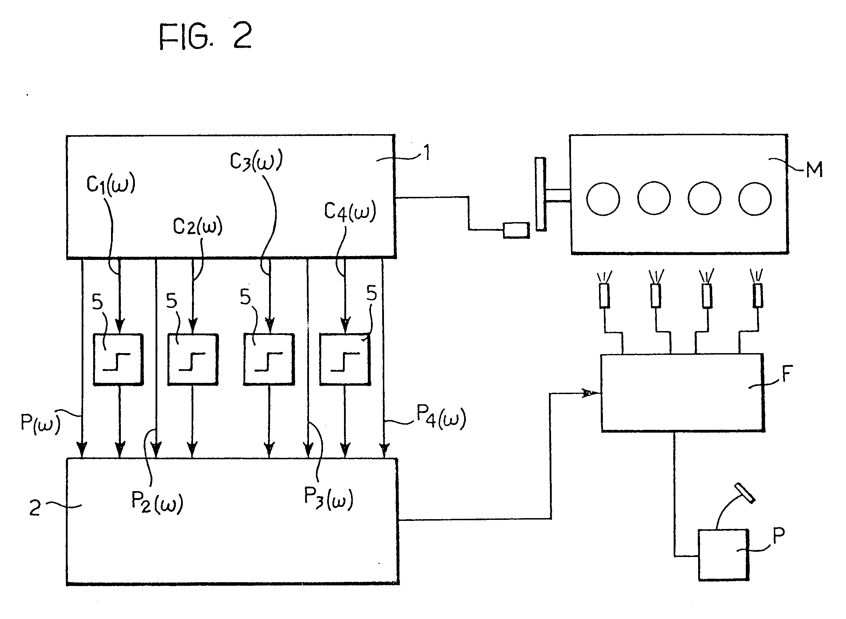

In the block diagram of Figure 2, four threshold functions (which are in fact provided in the software according to criteria which are quite obvious to a skilled programmer) are indicated 5 and can identify a lack of combustion in the various cylinders of the engine, that is they can identify the presence of a drop in useful torque, of the type indicated A in the graph of Figure 1, in the signals output by the device 1.

At the start of the test stage, which is activated by the operation of the push-button (which operation is signalled externally by means of a warning light) the module 2 acts on the infection control unit F so as to send a generally rich mixture to all the cylinders.

In these conditions, the detection of any lack of combustion in one or more of the cylinders can immediately be attributed to a defect in systems other than the injection system, for example, in the ignition system. The identification of such an anomaly can therefore be indicated externally immediately.

In the absence of such anomalies, the system according to EP-A-0 408 518 proceeds with successive cycles of dynamic monitoring of the useful torque and the braking torque delivered by the various cylinders of the engine M with a progressive and gradual weakening of the mixture sent to the various cylinders.

For this purpose it has been found to be advantageous for the duration of the injection to be reduced in steps of 2% for each acceleration-deceleration cycle until a reduction of 60% in the original value has been achieved.

The effect of this gradual weakening of the mixture is manifested sooner or later in lack of combustion in one of the cylinders.

When this is detected, the module 2 acquires the information relating to the conditions (the metering of the mixture, the rate of rotation of the engine, etc.) in which the lack of combustion, etc. took place.

The system can thus identify a kind of metering limit or threshold condition (a critical condition) which - for each cylinder - separates the set of parameters for which there is combustion from the set of parameters for which there is a lack of combustion.

When a detection has been made in a particular cylinder, the module 2 acts on the control unit F so that the mixture supplied to the cylinder which was the subject of the detection is enriched again - by a predetermined amount, for example by a 10% increase in the duration of the injection. The cylinder is thus returned safely to normal operating conditions so that it cannot interfere with the monitoring of the other cylinders, particularly at low rates of rotation.

In general, the probability of a lack of combustion occurring in several cylinders of the engine M in exactly the same operating conditions is very low. In any case, the possibility of such a coincidence arising can be minimized by a corresponding reduction in the steps used for the gradual weakening of the mixture.

When lack of combustion has been detected in all the cylinders of the engine the test stage may considered completed.

The information collected during the test stage can be used by the system in different ways according to the specific applicational requirements and conditions in which the analysis is carried out.

In fact the simple external presentation of the data for use, for example, in modifying the engine parameters at the design stage, can be changed to a diagnostic type of presentation for providing precise reference data to a person carrying out adjustments at the end of the assembly line, or during servicing, to enable the engine to be tuned correctly.

This tuning can, of course, be achieved according to different criteria in dependence on specific operational requirements, for example in order to minimise fuel consumption without giving rise to a lack of combustion or in order to improve the overall performance of the power unit, etc.

Naturally, it is also possible to arrange for the system to provide direct feedback, possibly in real time, to the control unit F so as to achieve automatic calibration (for example in order to adjust the operating conditions of the various cylinders and make them uniform, the injection function being modified differently in the individual cylinders, if necessary etc).

The aforesaid processing and display functions, as well as any feedback to the control unit F, can easily be provided for in the software according to general criteria which are well within the competence of an expert in the art and which do not therefore require detailed description herein since they are not essential for an understanding of the present invention.

A basic advantageous characteristic of the system according to the invention is that it can monitor the behaviour of the braking torque (and the corresponding tower value) close to lowest rates of rotation ($\omega$) of the engine M.

This monitoring is particularly useful for detecting any malfunctions due to imperfect sealing of one or more pistons of the engine in their respective cylinders.

Without wishing to go into a thorough analysis of the phenomenon from a physical point of view, the Applicant has observed that, in the presence of imperfect sealing (a low compression ratio-B in the graph of Figure 1), the braking torque $C_{ri}(\omega)$ (i = 1, 2, 3, 4) can be expressed generally, in the lowest range of rates of rotation (that is at the idling speed), according to a general expression of the type:

$$C_{ri}(\omega) = \frac{\partial - 1}{\omega} + \partial_0 + \partial_1\omega \quad (I)$$

which, for the corresponding braking power value ($P_{ri} = C_{ri} \times \omega$), corresponds to an expression of the type

$$P_{ri}(\omega) = \partial - 1 + \partial_0\omega + \partial_1\omega^2 \quad (II)$$

in which the presence of a constant addend ($\partial - 1$) which is independent of the rate of rotation $\omega$ can clearly be seen.

The module 2 of the system according to the invention can easily detect the presence of this constant addend in the power signal (derived by the device 1 according to the criteria described in prior Patent No . 1 180 045) in order to provide a corresponding external indication.

## Claims

1. A method for identifying the imperfect sealing of at least one of the pistons of an internal combustion engine (M) with respect to its cylinder, characterised in that it comprises the steps of:

 - monitoring (1) the braking power (Pri) of the at least one cylinder of the engine (M) in correpondence with a range of values of the rate of rotation ($\omega$) of the engine (M) near the idling speed, and
 - identifying (2) in the braking-power signal (Pri) the presence of a constant addend ($\partial$-1) which is independent of the rate of rotation ($\omega$) of the engine (M), the presence of this addend being indicative of imperfect sealing.

2. A system for identifying the imperfect sealing of at least one of the pistons of an internal combustion engine (M) with respect to its cylinder, characterised in that it includes :
 - monitoring means (1) for detecting the braking power (Pri) of the at least one cylinder of the engine (M) in correspondence with a range of values of the rate of rotation ($\omega$) of the engine (M) near its idling speed, and
 - processor means (2) for identifying in the braking power signal (Pri), the presence of a constant addend ($\partial$-1) which is independent of the rate of rotation ($\omega$) of the engine (M), the presence of the addend being indicative of imperfect sealing.

## Patentansprüche

1. Verfahren zum Identifizieren der mangelhaften Dichtung wenigstens eines der Kolben einer Brennkraftmaschine (M) bezuglich seines Zylinders, **dadurch gekennzeichnet**, daß es die Schritte umfaßt:
 - Überwachen (1) der Bremsleistung (Pri) des wenigstens einen Zylinders der Maschine (M) in Übereinstimmung mit einem Bereich von Werten der Drehzahl ($\omega$) der Maschine (M) nahe der Leerlaufdrehzahl, und
 - Identifizieren (2) in dem Bremsleistungssignal (Pri) das Vorhandensein eines konstanten Summanden ($\delta$-1), der unabhängig von der Drehzahl ($\omega$) der Maschine (M) ist, wobei das Vorhandensein dieses Summanden die mangelhafte Dichtung anzeigt.

2. System zum Identifizieren der mangelhaften Dichtung wenigstens eines der Kolben einer Brennkraftmaschine (M) bezüglich seines Zylinders, **dadurch gekennzeichnet,** daß es umfaßt:
 - Überwachungsmittel (1), um die Bremsleistung (Pri) des wenigstens einen Zylinders der Maschine (M) in Übereinstimmung mit einem Bereich von Werten der Drehzahl ($\omega$) der Maschine (M) nahe deren Leerlaufdrehzahl zu erfassen, und

4

- Bearbeitungsmittel (2), um in dem Bremsleistungssignal (Pri) das Vorhandensein eines konstanten Summanden ($\delta$-1) zu identifizieren, der unabhängig von der Drehzahl ($\omega$) der Maschine (M) ist, wobei das Vorhandensein des Summanden die mangelhafte Dichtung anzeigt.

**Revendications**

1. Procédé pour identifier l'étanchéité imparfaite d'au moins l'un des pistons d'un moteur à combustion interne (M) par rapport à son cylindre, caractérisé en ce qu'il comprend les étapes de :

    surveillance (1) de la puissance de freinage (Pri) dudit au moins un cylindre du moteur (M) en correspondance avec une plage de valeurs de la vitesse de rotation ($\omega$) du moteur (M) proche de la vitesse de ralenti ; et,

    identification (2) dans le signal de puissance de freinage (Pri) de la présence d'une valeur ajoutée constante ($\delta$ - 1) qui est indépendante de la vitesse de rotation ($\omega$) du moteur (M), la présence de cette valeur ajoutée étant indicative de l'étanchéité imparfaite.

2. Système pour identifier l'étanchéité imparfaite d'au moins l'un des pistons d'un moteur à combustion interne (M) par rapport à son cylindre, caractérisé en ce qu'il comprend :

    un moyen de surveillance (1) pour détecter la puissance de freinage (Pri) dudit au moins un cylindre du moteur (M) en correspondance avec une plage de valeurs de la vitesse de rotation ($\omega$) du moteur (M) proche de la vitesse de ralenti ; et,

    un moyen de traitement (2) pour identifier dans le signal de puissance de freinage (Pri) la présence d'une valeur ajoutée constante ($\delta$ - 1) qui est indépendante de la vitesse de rotation ($\omega$) du moteur (M) , la présence de cette valeur ajoutée étant indicative de l'étanchéité imparfaite.

FIG. 1

FIG. 2

EP 0 501 531 B1